# EUROPEAN PATENT SPECIFICATION

(11) **EP 3 914 372 B1**
(45) Date of publication and mention of the grant of the patent: **11.01.2023**
(21) Application number: 20718841.8
(22) Date of filing: 22.01.2020
(51) Int. Cl.: B01D 17/02, B01D 17/00, B01D 17/12, B01D 21/00, C02F 9/00, C02F 1/36, C02F 1/40, C02F 1/44

(54) **A WATER-OIL-SLUDGE SEPARATION PLANT**
WASSER-ÖL-SCHLAMM-TRENNANLAGE
INSTALLATION DE SÉPARATION EAU-HUILE-BOUE

(30) Priority: 22.01.2019 NO 20190082
(43) Date of publication of application: 01.12.2021
(73) Proprietor: RENA QUALITY GROUP AS, 4014 Stavanger (NO)
(72) Inventor: SAMUELSEN, Ørjan Weider, 4044 Hafrsfjord (NO)
(74) Representative: Acapo AS
(86) International application number: PCT/NO2020/050009
(87) International publication number: WO 2020/153850

(56) References cited:
- GB-A- 1 570 429

## Description

### Introduction

Invention relates to a water-oil-sludge separation plant. More specifically, the invention relates to a water-oil-sludge separation plant having a vertical separator that coarsely separates oil in an upper outlet, oil-polluted water in a middle section and heavier sludge in a lower outlet leading to a decanter centrifuge. The oil-polluted water from the middle section is led into a membrane filtration plant where permeate water is so pollution-free that it may be dumped and the retentate may be separated as separated oil or transported back, directly or indirectly, to the vertical separator. The sludge including oil, water and heavier constituents such as mud, cement residues, cuttings and metal particles is through an automatic control valve transported to a separator/decanter and creates a solid dehydrated matter that may be destroyed, and oil-polluted water or oil and water that each may be transported back to the slop tank in order to eventually be transported through the vertical separator and after that mainly to the membrane filtration plant.

### State of the Art

State of the art comprises centrifuge/decanter that centrifuges all material arriving from the slop tank and transports the separated, oil-polluted water to a membrane-based filtration plant. Drawback associated with such a plant is the centrifuge needs to be dimensioned for operation to separate all liquid with the sludge from the slop tank. This is not an efficient solution.

CN107043204 describes a system for processing of oil sludge comprising a control reservoir for mixing and stirring the oil sludge with water in order to obtain an emulsion consisting of water and oil sludge. It comprises a first step, three-phase separator for cold, i.e. at normal temperature, three-phase separation of said emulsion in order to obtain a first step sand, a first step waste water and a first step waste oil. It further comprises a second step, three-phase separator for warm three-phase separation of the waste water of the first step in order to obtain a second step oil sludge sand, a second step waste water, a second step waste oil and an organic gas mixture. It also comprises an oil-water separator for separating the first step waste oil from the second step waste oil in order to obtain separated waste water and mixed sludge waste. In addition, it comprises a sedimentation dam for precipitation caused by flocculation of the second step waste water to obtain a sludge and a supernatant. Finally, it comprises a sintering plant and a sludge incineration plant. According to the system for processing of the oil sludge, two-step, three-phase separation is obtained such that heat is generated by means of incineration, coal briquettes are created and sintered materials as well as a technical system having low emissions of oil sludge.

WO1999/42218 "Jet pump treatment of heavy oil production sand" discloses a plant with a high pressure treatment of sand slurry in order to separate particles in the bottom of a cylindrical tank having a conical bottom section to a jet pump and wherein the plant separates slop oil over a slurry level at approximately 90 % of the tank height. The tank has a conical top at which organic gas is exhausted.

GB patent specification GB1570429 describes an apparatus for continuously mechanically separating oil-water emulsions and for recovering their constituent parts, comprising a collecting/storage tan k for containing the emulsion and connected to an ultrafilter unit including a membrane which allows passage of water and surfactants from the emulsion whilst not allowing passage of oil, an after-sedimentation tank with an overflow outlet for separated oil, a mechanical separation column the lower part of which is formed as a hydrocyclone provided with tangentially arranged inlet apertures and a discharge pipe for heavier liquids separated in the hydrocyclone while its upper part has a flow-connection with the hydrocyclone for lighter liquids separated in the hydrocyclone, the said upper part being also connected to said after-sedimentation tank, the ultrafilter unit having an outlet on the filtrate side thereof and being by-passably connected in a recirculation ducting that is connected between the said discharge pipe and the said inlet apertures of the hydrocyclone.

### Brief Summary of the Invention

The present invention is defined in the accompanying claim set. The invention is A water-oil-sludge separation plant comprising:
- a slop tank (0) for water/oil/sludge, with an outlet for slop water;
- a vertical separator (1) comprising a vertical, substantially cylindrical tank (11) having a tangential intake (12), an upper oil outlet (27) at the top of the vertical tank (11), a middle, horizontal, tangential outlet (22) for oil-polluted water, and a lower pipe (44) for a sludge outlet at the bottom of the vertical tank (11), wherein an upwards-tapering conical frustum (2) is provided in the interior of the vertical tank (11) and the tangential outlet (22) is at a lower end of the conical frustum (2);
- a membrane filtration plant (6);
- a control valve (3) for the sludge outlet;
- a sensor (4) for sensing the density of the sludge in a lower portion of the vertical separator (1);
- a control unit (41);
wherein the -water-oil-sludge separation plant is arranged in such a way that:
- the slop water is directed from the outlet of the slop tank (0) to the vertical separator (1) and enters through a wall (20) of the vertical separator (1) and subsequently through the tangential intake (12), horizontally in the interior of the upwards-tapering conical frustum (2) surrounded by the vertical tank (11),
- water with oil exits via the top (21) of the conical frustum (2), whereas the sludge is separated by the conical frustum (2) and subsides in the interior down to the lower pipe (44),
- oil and possibly air are led out through the upper oil outlet (27),
- oil-polluted water continues to flow downwards, externally with respect to the conical frustum (2), to the tangential outlet (22) and then to the membrane filtration plant (6);
- the membrane filtration plant (6) is arranged to let out the permeate comprising cleansed water and to lead the concentrated retentate back to the vertical separator (1) or to the slop tank (0) or to remove it from the process;
wherein the water-oil-sludge separation plant further comprises a decanter centrifuge (5) arranged to separate dehydrated solids and to lead water treated in the decanter centrifuge (5) back to the vertical separator (1) or the slop tank (0);
- the control valve (3) is controlled by the control unit (41) that, based on the input of the sensor (4) continuously adjusts outlet of sludge to the decanter centrifuge (5).

Beneficial embodiments of the invention are defined in the dependent claims.

### Advantages of the Invention

A first advantage of the invention is that the vertical separator provided between the slop tank and the membrane separator effects a coarse separation and effectively separates lighter oil to an upper oil outlet. This light oil would otherwise need to pass through the decanter centrifuge and its separation would consume a lot of energy. In contrast to the oil separation process by means of membrane filtration plant, it is much more efficient to separate an oil retentate where a large portion of the oil is separated earlier in the process by means of the vertical separator according to the invention.

Another advantage of the invention is that the amount of liquid and solid entering the decanter centrifuge is significantly less compared to the methods of the prior art since a significant portion of the oil may be collected via top of the vertical separator.

A further advantage of the invention is that the oil-polluted water entering the membrane filtration plant is less polluted and includes significantly fewer particles than the methods of the prior art.

Yet another advantage of the invention is that the concentrated retentate, mainly consisting of oil, may be transferred back to the tank via a control valve and further into the vertical, cylindrical tank. As a consequence, there is no need to constantly monitor the amount of retentate and the oil fraction of the concentrated retentate is let out through the outlet at the top of the vertical, cylindrical tank jointly with the oil that is directly separated in the vertical, cylindrical tank.

An advantage of the invention is that anionic polymers in bore liquid that otherwise might clog the membrane may be flocked out using for instance lime CaOH₂ and convert these to solids that may be let out via the strainer.

The result is a continuous and efficient process to separate oil-polluted mud and water. Using the present method, old mud, i.e. waste material, may be separated and circulated out of the well in a plugging-and-abandonment operation employing polluted bore liquids with cuttings, cement, spacer fluid, waste and water.

### Short Description of the Drawings

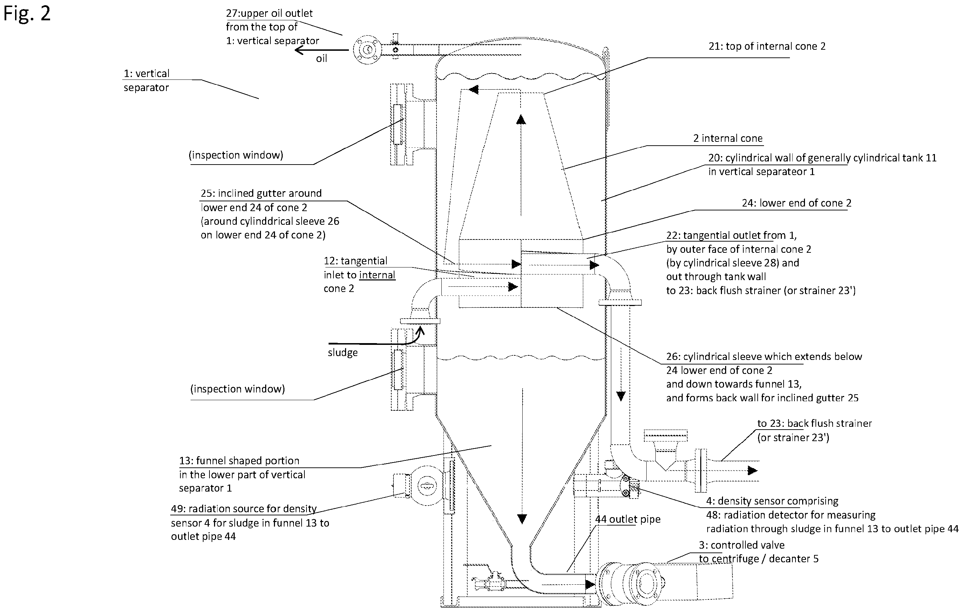

The invention is illustrated in the accompanying drawings, wherein:
Fig. 1 is a perspective view of the separation plant with a slop tank, a vertical separator, a membrane filtration plant and a decanter centrifuge.
Fig. 2 shows a simplified drawing of a vertical separator for use in the system according to the invention. The wall of the cylindrical tank is shown as being transparent.

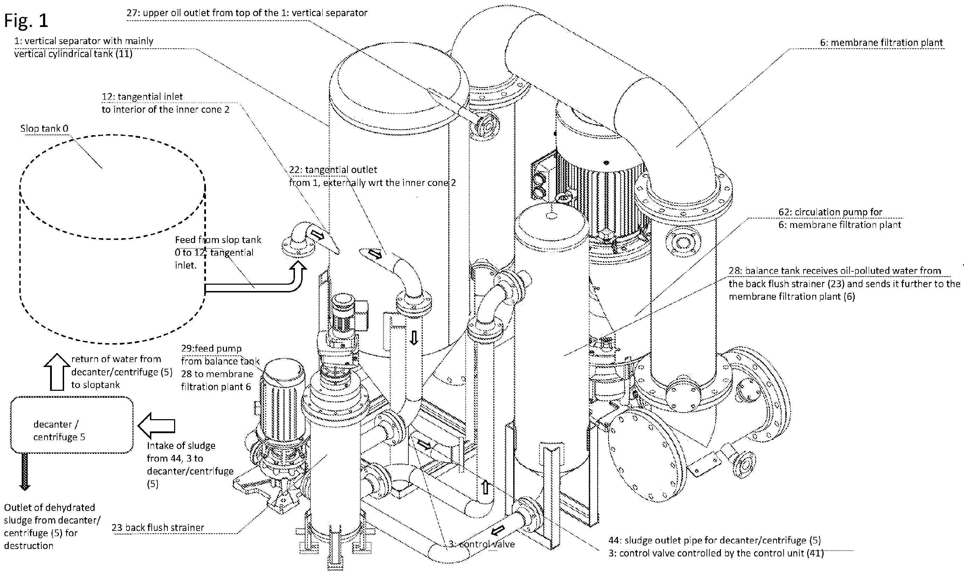

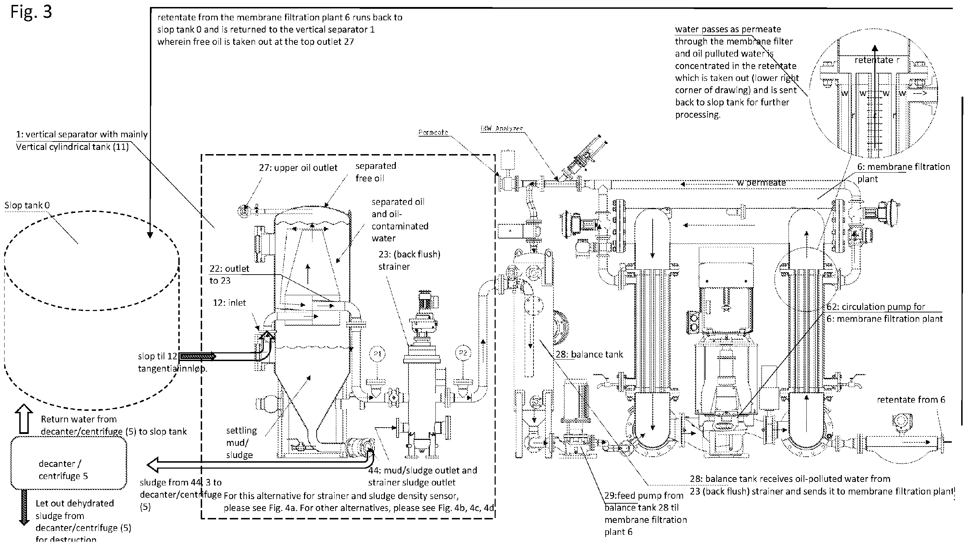

Fig. 3 is a system drawing corresponding to the drawing of Fig. 1 and including a slop tank, a vertical separator, a strainer, a balance tank, a membrane filtration plant and a decanter centrifuge. In the embodiment shown in Fig. 3, it is shown a density sensor for sludge accumulating in the lower, funnel-shaped portion of the vertical separator. The sensor comprises a radioactive source for radiating through the funnel-shaped portion and an oppositely arranged radioactive sensor measuring radiation that penetrates while being attenuated depending on the density (and the material composition) of the sludge precipitated in the funnel. The signal captured by the radioactive sensor is sent into a control unit of the control valve that opens so that an even, desired flow from the funnel is achieved and an even inflow of slop from the slop tank to the vertical separator, and an even flow of sludge from the funnel to the decanter centrifuge.
Figs. 4a-4d shows variants of the embodiment showing density sensors and strainers.

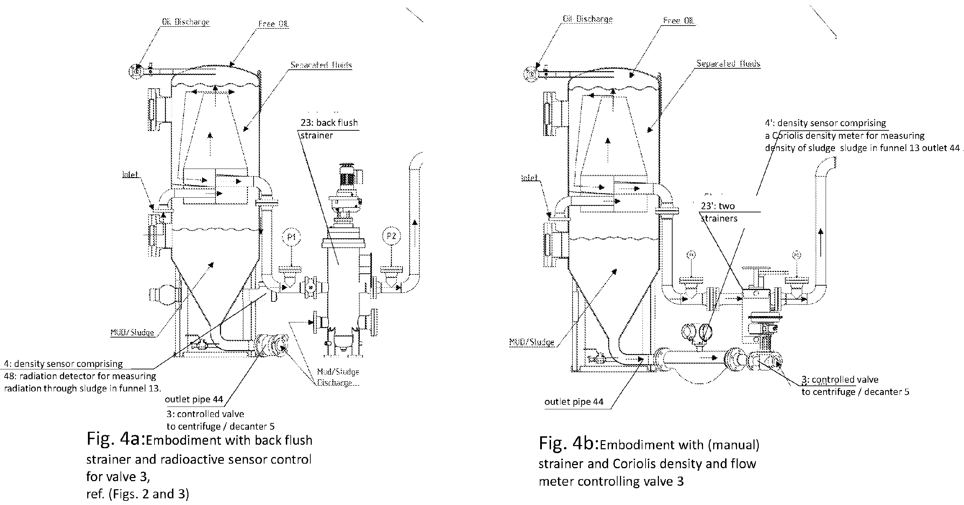

Fig. 4a illustrates an embodiment having an automatic "back flush strainer" for oil-polluted water at the outlet. In this embodiment it is also provided a radioactive source and a density sensor for sludge accumulating in the lower, funnel-shaped portion of the vertical separator.
The sensor comprises a radioactive source for radiating through the funnel-shaped portion and an oppositely arranged radioactive sensor measuring radiation that penetrates while being attenuated depending on the density (and the material composition) of the sludge precipitated in the funnel. This embodiment is also shown in Figs. 2 and 3.
Fig. 4b shows another embodiment with manually operated, double strainers for alternate use, and the density sensor measures Coriolis-based instrument (also measuring flow speed) and providing a signal to the control unit controlling the control valve.

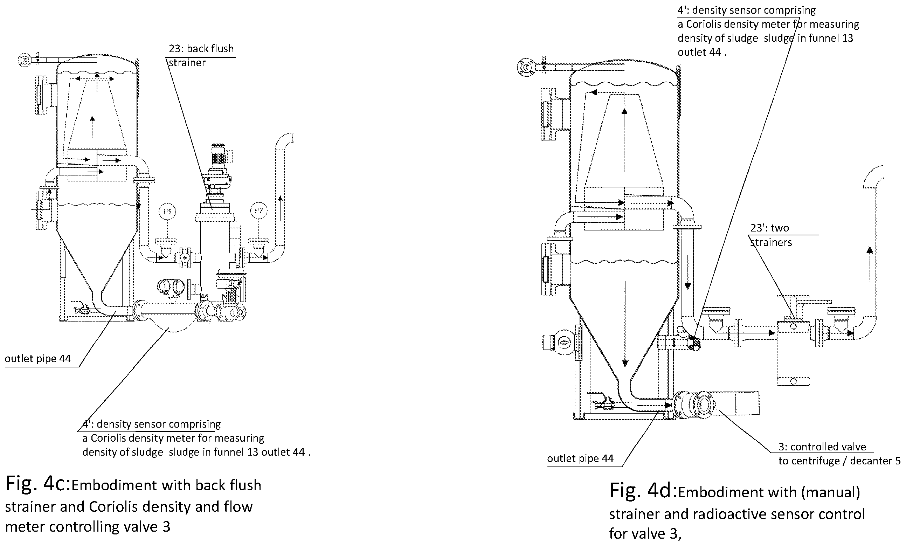

Fig. 4c illustrates another embodiment with a back flush strainer and a Coriolis-based density measurement device and a flow measurement device used to provide a signal for controlling the control valve.
Fig. 4d illustrates another embodiment with a manually operated strainer and a radioactive sensor to provide a signal for controlling the control valve.

### Description of the embodiments of the invention

The invention provides a water-oil-sludge separation plant comprising a slop tank (0) for water/oil/sludge having an outlet for slop water to a vertical separator (1). The slop water tangentially enters the interior of a vertical bushing (20) underneath an inner cone (2) open in the bottom, wherein the cone tapers upwardly, see Fig. 2.

The vertical separator (1) leads to three outlets:
An upper oil outlet (27) that lets out air and oil that are easily separated in a cyclone separation motion that arises in the vertical inner cone (2), see Fig. 1.

A middle, horizontal tangential outlet (22) for oil-polluted water to a membrane filtration plant (6).

Oil-polluted water is separated via the top of the cone (2) and subsides externally with respect to the cone and enters a lower funnel (13) with a lower pipe (44) for sludge outlet to a decanter centrifuge (5).

The decanter centrifuge (5) is arranged to separate the slurry in two components:
Firstly, to separate dehydrated solids that may subsequently be stored or destroyed.
Secondly, to transfer water treated in the decanter centrifuge back to the vertical separator (1) or to the slop tank (0).

The membrane filtration plant (6) is also a part of the invention and is arranged for two main functions:
Firstly, to separate a concentrated retentate and directly remove it from the process, or transport it, directly or indirectly, via the slop tank (0) to the vertical separator (1).
Secondly, wherein the permeate that comprises cleansed water is dumped or let out or recirculated if the need exists.

In accordance with the invention, the separation plant is arranged such that the slop water enters through a vertical cylindrical sleeve-shaped wall (20) in the vertical separator (1) and thereafter tangentially, horizontally into an upwards-tapering cone (2) surrounded by the vertical, cylindrical tank (11) wherein water with oil exits via the top (21) of the cone (2).

Oil and possibly air are let out through an oil outlet (27) at the top of the vertical, substantially cylindrical tank (11). This oil mat be let out/processed/recovered/stored.

Oil-polluted water continues to flow downwards from the top (21), externally with respect to the cone (2), to a tangential outlet (22) at a lower end (24) of the cone (2), and generally to the membrane filtration plant (6).

In accordance with another embodiment of the invention of the separation plant, the cone (2) separates the slurry that subsides in the interior down to a funnel (13) with the pipe (44) for sludge outlet from the bottom of the vertical, substantially cylindrical tank (11).

In accordance with another embodiment of the separation plant, an inclined gutter (25) is provided at the lower end (24) of the cone (2) such that the inclined gutter (25) leads to the tangential outlet (22). In this way, sedimentation of particles present in the water at the lower end of the cone upstream of the outlet (22) may be avoided.

In an embodiment of the separation plant, a cylindrical sleeve (26) is provided, said sleeve extending concentrically from the lower end (24) of the cone (2) and providing a back wall within the inclined gutter (25). This extends downwards to create a channel for the inlet water to the tank such that it doesn't flow into the cone immediately. Heavier fractions and particles and water are led downwards towards the lower, funnel-shaped portion (13) of the tank.

In a two-phase separator embodiment of the invention, the decanter centrifuge (5) may be arranged to jointly separate water and oil and lead separated oil and water, directly or indirectly, back to the vertical separator (1). In a three-phase separator embodiment of the invention, the decanter centrifuge (5) is arranged to lead separated oil so that it is recovered and separated water back to the slop tank or the vertical separator.

In one embodiment of the invention, a back flush strainer (23) is provided between the vertical separator (1) and the membrane filtration plant (6), wherein the back flush strainer (23) is provided between the tangential outlet (22) and the membrane filtration plant (6), said back flush strainer (23) being arranged to filter and remove particles and wherein the permeate water that is free from particles and oil-polluted is led to the membrane filtration plant (6). In an embodiment of the invention, a strainer (23') may be used between the vertical separator (1) and the membrane filtration plant (6), wherein a strainer (23) is provided between the tangential outlet (22) and the membrane filtration plant (6), said strainer (23) being arranged to filter and remove particles, and wherein the permeate water that is still oil-polluted, but free from particles is transported back to the membrane filtration plant (6). Such embodiments are shown in Figs. 4b and 4d wherein the back one is hidden by the front one. In these drawings, it is provided two strainers (23') connected in parallel wherein it is possible to alternate between letting the outlet (22) lead to the one strainer (23') for normal operation with outlet to the membrane filtration plant (6), while the other strainer (23') is shut off and emptied from particles, or the other way around.

In one embodiment of the invention, the back flush strainer (23) is arranged to transport the separated, heavy particles back to the slop tank (1) and further to the vertical separator (1) and preferably end up in the lower, funnel-shaped portion (13) and eventually in the sludge outlet (44) for further separation in the decanter centrifuge (5).

In one embodiment of the invention, a balance tank (28) is provided between the tangential outlet (22) and the membrane filtration plant (6), wherein the balance tank (28) is arranged to ensure that the membrane filtration plant (6) receives sufficient amounts of feed water, and possibly even to dose detergent when "Cleaning-In-Place" is performed. The oil-polluted water is led via a feed pump (29) to the membrane filtration plant (6), see Figs. 1 and 3. When the level in the balance tank (28), said level being controlled by a level sensor and a control valve, drops to a low level, the membrane filtration plant (6) is controlled so that it recirculates polluted and clean water back into the tank such that the level in the balance tank (28) doesn't drop even more and the pumps experience problems and suck in air into the membrane filtration plant (6). The recirculation is actually an important property of the plant as it is not desirable to stop the recirculation pumps (62) of the membrane filtration plant (6) every time the flow out of the tangential outlet (22) of the vertical separator (1) must be stopped in consequence of high density measured by the density sensor (4, 49, 48) in the funnel (13), the bottom of the vertical separator (1).

In an advantageous embodiment of the invention, the membrane filtration plant (6) is a tangential membrane filtration plant with a circulation pump (62), i.e. not a so-called "dead-end" membrane filtration plant. The water with the retentate is circulated and the permeate is transported tangentially out through the membrane. In the preferred embodiment, the membrane comprises pipes made of ceramics.

In an embodiment of the invention, the tangential membrane filtration plant (6) is arranged to lead the permeate water to be let out or to be dumped in a body of water, and return the concentrated retentate back to the slop tank (0) and to the tangential intake (12) for continuous separation occurring in the vertical separator (1), see Fig. 3, wherein the separated oil is led back for new processing wherein oil may be let out via outlet (27) in the top of the vertical separator or otherwise be led back into the circuit of the membrane filtration plant (6). In a situation where a risk of the liquid in the balance tank having too low level, the permeate water may be temporarily led back into the balance tank.

The sensor (4) for density of sludge may be of different types. In one embodiment, the sensor for density of sludge is a radioactive, absorption-based sensor comprising:
- a radiation source (49) provided on a first outer face of the funnel (13) for radiating a liquid, possibly including slurry, in the funnel (13),
- a radiation detector (48) provided on the opposite face of the funnel (13) and arranged to receive beams from the radiation source (49);
- wherein the degree of absorption of the radiation indicates a calibrated measurement of the quantum of slurry present in the funnel (13);
- wherein the control unit (41), based on the measurement of the quantum of slurry present in the funnel (13) opens the control valve (3). The control unit (41) holds the control valve (3) open until the quantum of slurry present in the funnel is below a given limit value. The control unit (41) may control the control valve (3) to open fully or partially depending on the quantum present and the capacity downstream.

In one embodiment of the invention, the density sensor (4) comprises a mass-flow meter measuring density and flow towards the decanter centrifuge (5). Such a density sensor may be based on ultrasound measurement of density and flow. The flow may be measured by means of an ultrasound-Doppler instrument. In another embodiment, the density sensor (4) may be a density sensor of the Coriolis type as shown in Figs. 4b and 4c. In one embodiment of the invention, the Coriolis-based density sensor will also be arranged to provide signal regarding mass flow through the outlet (44). The density signal from the density sensor (4) or the Coriolis-based density sensor (4') and preferably also the signal regarding mass flow may be used as input to the control unit controlling the control valve (3) at the outlet (44) such that the level of sludge and its density in the funnel-shaped portion are maintained at an acceptable level such that a continuous process may be established.

In another embodiment, the plant is programmed to run in the following way: the density sensor/mass flow meter (4, 4') and the control valve (3) are connected to the sludge outlet (44) of the vertical separator (1). The control unit (41) is programmed so that a constant flow is flowing through the outlet (44) of the vertical separator (1) towards the decanter centrifuge (5). This flow is determined based on the capacity of the decanter. The density sensor/mass flow meter (4, 4') will, in addition to the constant flow, also measure the density/weight of the slurry/flowing mass. When this density becomes higher than desirable, the control valve (3) is controlled to let out equal amount or more liquid flow than before, while the horizontal outlet (22) of the vertical separator towards the balance tank is closed by means of a valve (46) such that this heavy slurry/liquid doesn't spread out throughout the cone and towards the membrane filtration plant (6) where it is undesirable to have any slurry.

In one embodiment of the invention, the control unit (41), in addition to controlling the control valve (3) for slurry from the funnel (13), also controls another control valve (46) for complete or partial closure of the tangential outlet (22) to the strainer (23) while the control valve (3) is completely or partially open, in order to avoid imbalance in the vertical separator (1) or lack of liquid in the balance tank (28) while the funnel (13) is being drained from sludge. The valve (46) is closed to prevent heavy liquid/sludge from spreading upwards in the cone and the membrane system. It may occur a situation where non-polluted bore liquid is started to be pumped into the vertical separator (1) and that the flow towards the membrane system is no longer desirable for a certain time period. The flow towards the balance tank (28) will then be reduced and the membrane filtration plant (6) will be circulated into this tank such that said tank is at least partially full and the circulation pumps need not be stopped in this phase.

One may imagine an alternative of the presently claimed invention. Under certain circumstances, a system may operate without decanter centrifuge. The sludge is instead let out of the outlet pipe (44) and led to a separate, smaller tank for heavier slurry, or to a separate separator, for instance a filter press. Such a water-oil-sludge separation plant has the following features:
- a slop tank (0) for water/oil/sludge having an outlet for slop water to a vertical separator (1);
- the vertical separator (1) leads to three outlets:
   - an upper oil outlet (27) that lets out air and oil that are easily separated in a cyclone separation motion that arises in the vertical inner cone (2), see Fig. 1;
   - a middle, horizontal tangential outlet (22) for oil-polluted water to a membrane filtration plant (6);
   - a lower pipe (44) for sludge outlet to a separate tank or process for separate treatment of the sludge;
- a membrane filtration plant (6) is in this alternative system arranged for two main functions:
   Firstly, to separate a concentrated retentate and directly remove it from the process, or transport it, directly or indirectly, via the slop tank (0) to the vertical separator (1).
   Secondly, wherein the permeate comprises cleansed water that is dumped or let out or recirculated if the need exists.

In accordance with the invention, the lower pipe (44) for sludge outlet from the vertical separator (1) comprises a control valve (3) controlled by a control unit (41) that, based on a sensor (4, 4') for density of sludge in a lower portion of the vertical separator (1), continuously adjusts outlet of sludge to the decanter centrifuge (5).

## Claims

1. A water-oil-sludge separation plant comprising:
- a slop tank (0) for water/oil/sludge, with an outlet for slop water;
- a vertical separator (1) comprising a vertical, substantially cylindrical tank (11) having a tangential intake (12), an upper oil outlet (27) at the top of the vertical tank (11), a middle, horizontal, tangential outlet (22) for oil-polluted water, and a lower pipe (44) for a sludge outlet at the bottom of the vertical tank (11), wherein an upwards-tapering conical frustum (2) is provided in the interior of the vertical tank (11) and the tangential outlet (22) is at a lower end of the conical frustum (2);
- a membrane filtration plant (6);
- a control valve (3) for the sludge outlet;
- a sensor (4) for sensing the density of the sludge in a lower portion of the vertical separator (1);
- a control unit (41);
wherein the water-oil-sludge separation plant is arranged in such a way that:
- the slop water is directed from the outlet of the slop tank (0) to the vertical separator (1) and enters through a wall (20) of the vertical separator (1) and subsequently through the tangential intake (12), horizontally in the interior of the upwards-tapering conical frustum (2) surrounded by the vertical tank (11),
- water with oil exits via the top (21) of the conical frustum (2), whereas the sludge is separated by the conical frustum (2) and subsides in the interior down to the lower pipe (44),
- oil and possibly air are led out through the upper oil outlet (27),
- oil-polluted water continues to flow downwards, externally with respect to the conical frustum (2), to the tangential outlet (22) and then to the membrane filtration plant (6);
- the membrane filtration plant (6) is arranged to let out the permeate comprising cleansed water and to lead the concentrated retentate back to the vertical separator (1) or to the slop tank (0) or to remove it from the process;
wherein the water-oil-sludge separation plant is **characterized in that**:
- it comprises a decanter centrifuge (5) arranged to separate dehydrated solids and to lead water treated in the decanter centrifuge (5) back to the vertical separator (1) or the slop tank (0);
- the control valve (3) is controlled by the control unit (41) that, based on the input of the sensor (4) continuously adjusts outlet of sludge to the decanter centrifuge (5).

2. The separation plant in accordance with claim 1, wherein the vertical tank (11) has a funnel (13) such that the sludge separated by the conical frustum (2) subsides in the funnel (13) towards the lower pipe (44) for sludge outlet from the bottom of the vertical, substantially cylindrical tank (11).

3. The separation plant in accordance with any of the preceding claims, wherein an inclined gutter (25) is provided at the lower end (24) of the conical frustum (2), wherein the inclined gutter (25) leads to the tangential outlet (22).

4. The separation plant in accordance with claim 3, wherein a cylindrical sleeve (26) is provided, said sleeve extending concentrically from the lower end (24) of the conical frustum (2), and providing a back wall within the inclined gutter (25).

5. The separation plant in accordance with any of the preceding claims, wherein the decanter centrifuge (5) is a three-phase separator arranged to lead separated oil so that it is let out/recovered.

6. The separation plant in accordance with any of claims 1-4, wherein the decanter centrifuge (5) is a two-phase separator arranged to lead separated oil and water back to the slop tank or to the vertical separator (1).

7. The separation plant in accordance with any of the preceding claims, wherein a backflush strainer (23) is provided between the vertical separator (1) and the membrane filtration plant (6), wherein the backflush strainer (23) is provided between the tangential outlet (22) and the membrane filtration plant (6), said backflush strainer (23) being arranged to filter and remove particles and
wherein the permeate water that is free from particles and oil-polluted is led to the membrane filtration plant (6).

8. The separation plant in accordance with claim 7, wherein the backflush strainer (23) is arranged to transport the separated, heavy particles back to the slop tank (1) for further treatment in the vertical separator (1) for possible further separation in the decanter centrifuge (5).

9. The separation plant in accordance with any of the preceding claims, wherein a balance tank (28) is provided between the tangential outlet (22) and the membrane filtration plant (6), wherein the balance tank (28) is arranged to ensure that the membrane filtration plant (6) receives sufficient amounts of feed water, and weakly oil-polluted water is led to a feed pump (29) and further to the membrane filtration plant (6).

10. The separation plant in accordance with claim 9, wherein the membrane filtration plant (6) is a tangential membrane filtration plant with a circulation pump (62).

11. The separation plant in accordance with claim 10, wherein the tangential membrane filtration plant (6) is arranged to lead the permeate water to be let out or to be dumped in a body of water, and return the concentrated retentate back to the slop tank (0) and to the tangential intake (12) in the vertical separator back for new processing wherein oil may be let out via upper outlet (27).

12. The separation plant in accordance with claim 2, and, optionally, with anyone of claims 3 - 11,
wherein the sensor (4) for density of sludge is a radioactive, absorption-based sensor comprising:
- a radiation source (49) provided on a first outer face of the funnel (13) for radiating a liquid, possibly including slurry, in the funnel (13),
- a radiation detector (48) provided on the opposite face of the funnel (13) and arranged to receive beams from the radiation source (49);
- wherein the degree of absorption of the radiation indicates a calibrated measurement of the quantum of slurry present in the funnel (13);
- wherein the control unit (41), based on the measurement of the quantum of slurry present in the funnel (13), opens the control valve (3) until the quantum of slurry present in the funnel is below a given limit value.

13. The separation plant in accordance with claims 2 and 7, optionally, with anyone of claims 3-6 or 8- 12, wherein the control unit (41), in addition to controlling the control valve (3) for slurry from the funnel (13), also controls another control valve (46)
for complete or partial closure of the tangential outlet (22) to the backflush strainer (23) while the
control valve (3) is completely or partially open, in order to avoid imbalance in the vertical separator (1) or lack of liquid in the balance tank (28) while the funnel (13) is being drained from sludge.

## Patentansprüche

1. Wasser-Öl-Schlamm Separationsanlage, umfassend:
- einen Schmutzwassertank (0) für Wasser/Öl/Schlamm, mit einem Auslass für Schmutzwasser;
- einen Vertikalseparator (1), umfassend einen vertikalen, im Wesentlichen zylindrischen Tank (11) mit einem tangentialen Einlass (12), einen im oberen Teil des vertikalen Tanks (11) befindlichen oberen Ölauslass (27), einen mittleren, horizontalen, tangentialen Auslass (22) für ölverschmutztes Wasser, und ein unteres Rohr (44) für einen Schlammauslass am Boden des Vertikaltanks (11), wobei im Inneren des Vertikaltanks (11) ein sich nach oben verjüngender Konusstumpf (2) bereitgestellt ist und sich der tangentiale Auslass (22) an einem unteren Ende des Konusstumpfs (2) befindet;
- eine Membranfiltrationsanlage (6);
- ein Steuerventil (3) für den Schlammauslass;
- einen Sensor (4) zum Erfassen der Dichte des Schlamms in einem unteren Teil des Vertikalseparators (1);
- eine Steuereinheit (41);
wobei die Wasser-Öl-Schlamm Separationsanlage so eingerichtet ist, dass:
- das Schmutzwasser vom Auslass des Schmutzwassertanks (0) zum Vertikalseparator (1) geleitet wird und durch eine Wand (20) des Vertikalseparators (1) und anschließend durch den tangentialen Einlass (12), horizontal in das Innere des sich nach oben verjüngenden Konusstumpfes (2), der von dem Vertikalabscheider (11) Behälter (11) umgeben ist, eintritt,
- Wasser mit Öl über die Spitze (21) des Konusstumpfes (2) austritt, während der Schlamm durch den Konusstumpf (2) separiert wird und im Inneren bis zum unteren Rohr (44) absinkt,
- Öl und eventuell Luft durch den oberen Ölauslass (27) abgeleitet werden,
- ölverschmutztes Wasser weiter nach unten fließt, außen am Konusstumpf (2) vorbei, zum tangentialen Auslass (22) und dann zur Membranfiltrationsanlage (6);
- die Membranfiltrationsanlage (6) eingerichtet ist, um das gereinigtes Wasser umfassende Permeat abzugeben und das konzentrierte Retentat zurück zum Vertikalseparator (1) oder zum Schmutzwassertank (0) zu leiten oder es aus dem Prozess zu entfernen;
wobei die Wasser-Öl-Schlamm Separationsanlage **dadurch gekennzeichnet ist, dass**:
- sie eine Dekantierzentrifuge (5) umfasst, die eingerichtet ist, um entwässerte Feststoffe abzutrennen und Wasser, das in der Dekantierzentrifuge (5) behandelt wurde, zurück zum Vertikalseparator (1) oder zum Schmutzwassertank (0) zurückzuführen;
- das Steuerventil (3) von der Steuereinheit (41) gesteuert wird, die auf der Grundlage des Input des Sensors (4) den Abfluss des Schlamms zur Dekantierzentrifuge (5) kontinuierlich einstellt.

2. Separationsanlage nach Anspruch 1, wobei der vertikale Tank (11) einen Trichter (13) aufweist, so dass der durch den Konusstumpf (2) separierte Schlamm im Trichter (13) in Richtung des unteren Rohrs (44) für den Schlammauslass vom Boden des vertikalen, im Wesentlichen zylindrischen Tanks (11) absinkt.

3. Separationsanlage nach einem der vorangegangenen Ansprüche, wobei am unteren Ende (24) des Konusstumpfes (2) eine geneigte Rinne (25) bereitgestellt ist, wobei die geneigte Rinne (25) zum tangentialen Auslauf (22) führt.

4. Separationsanlage nach Anspruch 3, wobei eine zylindrische Hülse (26) bereitgestellt wird, die sich konzentrisch vom unteren Ende (24) des Konusstumpfes (2) aus erstreckt und eine Rückwand innerhalb der schrägen Rinne (25) bereitstellt.

5. Separationsanlage nach einem der vorangegangenen Ansprüche, wobei die Dekantierzentrifuge (5) ein Dreiphasen-Separator ist, der eingerichtet ist, um abgeschiedenes Öl so zu führen, dass es abgegeben/zurückgewonnen wird.

6. Separationsanlage nach einem der Ansprüche 1 bis 4, wobei die Dekantierzentrifuge (5) ein Zweiphasen-Separator ist, der so eingerichtet ist, dass er abgeschiedenes Öl und Wasser in den Schmutzwassertank oder in den Vertikalseparator (1) zurückführt.

7. Separationsanlage nach einem der vorangegangenen Ansprüche, wobei zwischen dem Vertikalseparator (1) und der Membranfiltrationsanlage (6) ein Rückspülsieb (23) bereitgestellt wird, wobei das Rückspülsieb (23) zwischen dem tangentialen Auslass (22) und der Membranfiltrationsanlage (6) angeordnet ist, wobei das Rückspülsieb (23) eingerichtet ist, um Partikel zu filtern und zu entfernen, und wobei das von Partikeln freie und ölverschmutzte Permeatwasser zur Membranfiltrationsanlage (6) geleitet wird.

8. Separationsanlage nach Anspruch 7, wobei das Rückspülsieb (23) eingerichtet ist, um die abgetrennten, schweren Partikel zurück zum Schmutzwassertank (1) zur weiteren Behandlung im Vertikalseparator (1) zur möglichen weiteren Separierung in der Dekantierzentrifuge (5) zu transportieren.

9. Separationsanlage nach einem der vorangegangenen Ansprüche, wobei ein Ausgleichsbehälter (28) zwischen dem tangentialen Auslass (22) und der Membranfiltrationsanlage (6) bereitgestellt wird, wobei der Ausgleichsbehälter (28) eingerichtet ist, um sicherzustellen, dass die Membranfiltrationsanlage (6) ausreichende Mengen an Speisewasser erhält, und schwach ölverschmutztes Wasser zu einer Speisepumpe (29) und des Weiteren zur Membranfiltrationsanlage (6) geleitet wird.

10. Separationsanlage nach Anspruch 9, wobei die Membranfiltrationsanlage (6) eine tangentiale Membranfiltrationsanlage mit einer Umwälzpumpe (62) ist.

11. Separationsanlage nach Anspruch 10, wobei die tangentiale Membranfiltrationsanlage (6) so eingerichtet ist, dass sie das Permeatwasser zum Ablassen oder zum Einleiten in ein Gewässer leitet und das konzentrierte Retentat zur erneuten Verarbeitung in den Schmutzwassertank (0) und zum tangentialen Einlass (12) im Vertikalseparator zurückführt, wobei Öl über den oberen Auslass (27) abgegeben werden kann.

12. Separationsanlage nach Anspruch 2 und optional nach einem der Ansprüche 3-11, wobei der Sensor (4) zum Erfassen der Dichte des Schlamms ein radioaktiver Sensor auf Absorptionsbasis ist, umfassend:
- eine Strahlungsquelle (49), die an einer ersten Außenfläche des Trichters (13) bereitgestellt ist, um eine Flüssigkeit, die möglicherweise Schlamm enthält, in den Trichter (13) zu bestrahlen,
- einen Strahlungsdetektor (48), der auf der gegenüberliegenden Seite des Trichters (13) bereitgestellt und eingerichtet ist, um Strahlen von der Strahlungsquelle (49) zu empfangen;
- wobei der Grad der Absorption der Strahlung eine kalibrierte Messung der im Trichter (13) vorhandenen Menge an Schlamm anzeigt;
- wobei die Steuereinheit (41) basierend auf der Messung der im Trichter (13) vorhandenen Menge an Schlamm das Steuerventil (3) öffnet, bis die Schlammmenge im Trichter unter einem vorgegebenen Grenzwert liegt.

13. Separationsanlage nach einem der Ansprüche 2 und 7, optional nach einem der Ansprüche 3-6 oder 8-12, wobei die Steuereinheit (41) zusätzlich zur Steuerung des Steuerventils (3) für Schlamm aus dem Trichter (13) auch ein weiteres Steuerventil (46)
zum vollständigen oder teilweisen Verschließen des tangentialen Auslasses (22) des Rückspülsiebs (23) steuert während das
Steuerventil (3) ganz oder teilweise geöffnet ist, um ein Ungleichgewicht im Vertikalseparator (1) oder Flüssigkeitsmangel im Ausgleichsbehälter (28) zu vermeiden, während der Trichter (13) vom Schlamm entleert wird.

## Revendications

1. Installation de séparation eau-huile-boue comprenant :
- une citerne de décantation (0) pour eau/huile/boue, avec une sortie pour de l'eau de décantation ;
- un séparateur vertical (1) comprenant une citerne verticale sensiblement cylindrique (11) présentant une admission tangentielle (12), une sortie d'huile supérieure (27) au niveau du haut de la citerne verticale (11), une sortie centrale, horizontale, tangentielle (22) pour de l'eau polluée par de l'huile, et un conduit inférieur (44) pour une sortie de boue au niveau du bas de la citerne verticale (11), dans laquelle un tronc conique rétrécissant vers le haut (2) est fourni à l'intérieur de la citerne verticale (11) et la sortie tangentielle (22) est au niveau d'une extrémité inférieure du tronc conique (2) ;
- une installation de filtration à membrane (6) ;
- une vanne de commande (3) pour la sortie de boue ;
- un capteur (4) pour détecter la densité de la boue dans une section inférieure du séparateur vertical (1) ;
- une unité de commande (41) ;
où l'installation de séparation eau-huile-boue est agencée de telle sorte que :
- l'eau de décantation est dirigée de la sortie de la citerne de décantation (0) vers le séparateur vertical (1) et pénètre à travers une paroi (20) du séparateur vertical (1) et ensuite à travers l'admission tangentielle (12), horizontalement à l'intérieur du tronc conique rétrécissant vers le haut (2) entouré par la citerne verticale (11),
- de l'eau avec de l'huile sort via le haut (21) du tronc conique (2), tandis que la boue est séparée par le tronc conique (2) et se tasse à l'intérieur vers le bas vers le conduit inférieur (44),
- de l'huile et éventuellement de l'air sont évacués à travers la sortie d'huile supérieure (27),
- de l'eau polluée par de l'huile continue à s'écouler vers le bas, de manière externe par rapport au tronc conique (2), vers la sortie tangentielle (22) et ensuite vers l'installation de filtration à membrane (6) ;
- l'installation de filtration à membrane (6) est agencée pour laisser s'évacuer le perméat comprenant de l'eau nettoyée et pour reconduire le rétentat concentré vers le séparateur vertical (1) ou vers la citerne de décantation (0) ou pour le supprimer du processus ;
où l'installation de séparation eau-huile-boue est **caractérisée en ce que** :
- elle comprend un décanteur centrifuge (5) agencé pour séparer des solides déshydratés et pour reconduire de l'eau traitée dans le décanteur centrifuge (5) vers le séparateur vertical (1) ou la citerne de décantation (0) ;
- la vanne de commande (3) est commandée par l'unité de commande (41) qui, sur la base de l'entrée du capteur (4) ajuste en continu une sortie de boue vers le décanteur centrifuge (5).

2. Installation de séparation selon la revendication 1, dans laquelle la citerne verticale (11) présente un entonnoir (13) de telle sorte que la boue séparée par le tronc conique (2) se tasse dans l'entonnoir (13) vers le conduit inférieur (44) pour une sortie de boue depuis le bas de la citerne verticale sensiblement cylindrique (11).

3. Installation de séparation selon l'une quelconque des revendications précédentes, dans laquelle une gouttière inclinée (25) est fournie au niveau de l'extrémité inférieure (24) du tronc conique (2), dans laquelle la gouttière inclinée (25) conduit à la sortie tangentielle (22).

4. Installation de séparation selon la revendication 3, dans laquelle un manchon cylindrique (26) est fourni, ledit manchon s'étendant de manière concentrique à partir de l'extrémité inférieure (24) du tronc conique (2) et fournissant une paroi arrière au sein de la gouttière inclinée (25).

5. Installation de séparation selon l'une quelconque des revendications précédentes, dans laquelle le décanteur centrifuge (5) est un séparateur en trois phases agencé pour conduire de l'huile séparée de sorte qu'elle peut s'évacuer/ est récupérée.

6. Installation de séparation selon l'une quelconque des revendications 1 à 4, dans laquelle le décanteur centrifuge (5) est un séparateur en deux phases agencé pour reconduire de l'huile et de l'eau séparées vers la citerne de décantation ou vers le séparateur vertical (1).

7. Installation de séparation selon l'une quelconque des revendications précédentes, dans laquelle une crépine de rinçage (23) est fournie entre le séparateur vertical (1) et l'installation de filtration à membrane (6), dans laquelle la crépine de rinçage (23) est fournie entre la sortie tangentielle (22) et l'installation de filtration à membrane (6), ladite crépine de rinçage (23) étant agencée pour filtrer et éliminer des particules et dans laquelle l'eau de perméat qui est exempte de particules et polluée par de l'huile est conduite vers l'installation de filtration à membrane (6).

8. Installation de séparation selon la revendication 7, dans laquelle la crépine de rinçage (23) est agencée pour faire revenir les particules lourdes séparées à la citerne de décantation (1) pour un traitement supplémentaire dans le séparateur vertical (1) pour une possible séparation supplémentaire dans le décanteur centrifuge (5).

9. Installation de séparation selon l'une quelconque des revendications précédentes, dans laquelle une citerne d'équilibrage (28) est fournie entre la sortie tangentielle (22) et l'installation de filtration à membrane (6), dans laquelle la citerne d'équilibrage (28) est agencée pour garantir que l'installation de filtration à membrane (6) reçoit des quantités suffisantes d'eau d'alimentation, et l'eau faiblement polluée par de l'huile est conduite à une pompe d'alimentation (29) puis à l'installation de filtration à membrane (6).

10. Installation de séparation selon la revendication 9, dans laquelle l'installation de filtration à membrane (6) est une installation de filtration à membrane tangentielle avec une pompe de circulation (62).

11. Installation de séparation selon la revendication 10, dans laquelle l'installation de filtration à membrane tangentielle (6) est agencée pour conduire l'eau de perméat à être évacuée ou à être déversée dans une étendue d'eau, et reconduire le rétentat concentré à la citerne de décantation (0) et à l'admission tangentielle (12) dans le séparateur vertical pour un nouveau traitement dans lequel de l'huile peut être évacuée via une sortie supérieure (27).

12. Installation de séparation selon la revendication 2, et, facultativement, selon l'une quelconque des revendications 3 à 11, dans laquelle le capteur (4) de densité de boue est un capteur radioactif basé sur l'absorption comprenant :
- une source de rayonnement (49) fournie sur une première face externe de l'entonnoir (13) pour irradier un liquide, éventuellement incluant une suspension, dans l'entonnoir (13) ;
- un capteur de rayonnement (48) fourni sur la face opposée de l'entonnoir (13) et agencé pour recevoir des rayons en provenance de la source de rayonnement (49) ;
- dans laquelle le degré d'absorption du rayonnement indique une mesure étalonnée de la quantité de suspension présente dans l'entonnoir (13) ;
- dans laquelle l'unité de commande (41), sur la base de la mesure de la quantité de suspension présente dans l'entonnoir (13), ouvre la vanne de commande (3) jusqu'à ce que la quantité de suspension présente dans l'entonnoir soit inférieure à une valeur limite donnée.

13. Installation de séparation selon les revendications 2 et 7, facultativement, selon l'une quelconque des revendications 3 à 6 ou 8 à 12, dans laquelle l'unité de commande (41), en plus de commander la vanne de commande (3) pour une suspension en provenance de l'entonnoir (13), commande également une autre vanne de commande (46) pour une fermeture totale ou partielle de la sortie tangentielle (22) vers la crépine de rinçage (23) tandis que la vanne de commande (3) est ouverte en totalité ou en partie, afin d'éviter un déséquilibre dans le séparateur vertical (1) ou une pénurie de liquide dans la citerne d'équilibrage (28) tandis que l'entonnoir (13) est vidangé de la boue.
